# EUROPEAN PATENT SPECIFICATION

(11) **EP 3 147 210 B1**
(45) Date of publication and mention of the grant of the patent: **14.11.2018**
(21) Application number: 16190742.3
(22) Date of filing: 27.09.2016
(51) Int. Cl.: B64C 27/04, B64C 27/82, B64C 39/02, B64D 33/02, B64D 33/04, B64D 33/08

(54) **UNMANNED HELICOPTER**
UNBEMANNTER HUBSCHRAUBER
HÉLICOPTÈRE SANS PILOTE

(30) Priority: 28.09.2015 CN 201510629135
(43) Date of publication of application: 29.03.2017
(73) Proprietor: Ewatt Technology Co., Ltd., Wuhan Hubei 430000 (CN)
(72) Inventor: ZHAO, Guocheng, Wuhan, Hubei 430000 (CN); LUO, Wei, Wuhan, Hubei 430000 (CN); QI, Pengcheng, Wuhan, Hubei 430000 (CN)
(74) Representative: Roman, Alexis

(56) References cited:
- EP-A1- 2 876 051
- CN-A- 104 691 766
- CN-U- 201 943 855
- FR-A1- 2 685 733
- US-A1- 2007 236 009
- US-A1- 2010 181 416

## Description

### Field of the Invention

The present invention belongs to the technical field of unmanned aerial vehicles, and particularly relates to an unmanned helicopter.

### Background of the Invention

A pilotless aircraft is referred to as an unmanned aerial vehicle, and is an unmanned aircraft manipulated by using radio remote control equipment and a self-contained program control device. There is no cockpit on the unmanned aerial vehicle, but such equipment as an autopilot, the program control device, an information collection device and the like are installed. The personnel on the ground, a naval vessel or a master remote control station carries out tracking, positioning, remote control, telemetering and digital transmission on the unmanned aerial vehicle through such equipment as a radar. The unmanned aerial vehicle can take off just like an ordinary airplane under radio remote control or blast off by a booster rocket, and can also be taken into the air by a master to fly.

In the prior art, an air inlet for the entry of external air is generally formed in the bottom of a fuselage of an unmanned helicopter, so that the external air flows into the fuselage through the inlet, and is burnt under the action of an engine to provide power for the flight of the unmanned helicopter.

However, as the unmanned helicopter has a certain flight speed when flying in the air, the air on the surrounding of the fuselage has a relative air flow velocity relative to the fuselage. When the external air inflows from the air inlet formed in the bottom of the fuselage, as the flow direction of the air relative to the fuselage and the direction of the air entering the fuselage from the air inlet are vertical to each other, the air at the outside of the fuselage cannot quickly and efficiently flow into the fuselage, therefore the number of effective oxygen atoms that enter the engine to be burnt with a unit volume is decreased, resulting in insufficient gas combustion, which eventually generates adverse effects on the normal flight of the unmanned helicopter.

### Summary of the Invention

The present invention provides an unmanned helicopter. An air inlet direction corresponds to a flow direction of airflow that flows reversely relative to the unmanned helicopter, so that the airflow smoothly flows into an air inlet system under the action of its own flow velocity relative to the unmanned helicopter, and accordingly the technical problem in the prior art that the air entering a fuselage with a unit volume is burnt insufficiently, which generates adverse effects on the normal flight of the unmanned helicopter is solved or partially solved.

The present invention provides an unmanned helicopter according to claim 1, the features placed in the preamble of said claim 1 being disclosed by US2010/0181416 (Sakamoto).

Optionally, the air inlet system includes: an air inlet cover, which is fixed on the second side, and the air inlet direction of which faces to the direction of the nose; and an engine, which is fixed in the fuselage and located between the second side and the third side, and which is connected with the air inlet cover, so that the airflow flows into the engine through the air inlet cover to be burnt.

Optionally, the air inlet cover includes: an air inlet, which is used for enabling the airflow that reversely flows relative to the unmanned helicopter to inflow; a filter screen, which is fixed at the air inlet to filter the airflow flowing into the air inlet; and a buffer chamber, which is provided with a division plate therein; wherein the buffer chamber is divided into a first area and a second area by the division plate, so that the airflow passing by the filter screen firstly flows into the first area to be buffered, and the buffered airflow flows into the second area from the first area and flows into the engine from the second area.

Optionally, the exhaust system includes: an exhaust pipe, which is arranged on the third side, and the exhaust direction of which faces to the direction of the tail to discharge the tail gas generated by combustion in the engine through the exhaust pipe; and a heat shield, which is arranged between the engine and the exhaust pipe to isolate the exhaust pipe from the inner space of the fuselage.

Optionally, the exhaust pipe includes: a first pipe, which is U-shaped and includes a first flexible end and a second flexible end; a second pipe, which is cylindrical and includes a third flexible end and an exhaust end; a first flexible connecting piece, through which the first flexible end is in flexible connection with the engine, so that the first pipe can generate relative movement relative to the engine; and a second flexible connecting piece, through which the second flexible end is in flexible connection with the third flexible end, so that the second pipe can generate relative movement relative to the first pipe; wherein the tail gas after combustion in the engine enters the first pipe through the first flexible end to be buffered, and the buffered tail gas enters the second pipe through the second flexible end and the third flexible end successively and is discharged from the exhaust pipe.

Optionally, the first flexible connecting piece includes a first spring group and a first plate group; wherein the first spring group includes at least three first springs; the first plate group includes a first fixing plate and a second fixing plate; the first fixing plate is fixed at the air outlet of the engine, the second fixing plate is fixed on the first flexible end, and in the at least three first springs, one end of each first spring is connected with the first fixing plate, and the other end thereof is connected with the second fixing plate; the air outlet of the engine is sleeved on the first flexible end, and the first flexible end can generate relative movement relative to the engine through the at least three first springs; and/or, the second flexible connecting piece includes a second spring group and a second plate group; wherein the second spring group includes at least three second springs; the second plate group includes a third fixing plate and a fourth fixing plate; the third fixing plate is fixed on the second flexible end, the fourth fixing plate is fixed on the third flexible end, and in the at least three second springs, one end of each second spring is connected with the third fixing plate, and the other end thereof is connected with the fourth fixing plate; the third flexible end is sleeved on the second flexible end, and the third flexible end can generate relative movement relative to the second flexible end through the at least three second springs.

Optionally, the exhaust end includes: a conical cylinder, which includes a wide conical port and a narrow conical port, with a plurality of circulation ports formed in the side wall of the conical cylinder; and an anechoic chamber, which is sleeved on the periphery of the conical cylinder, with an exhaust port formed in the anechoic chamber; wherein the tail gas in the second pipe flows into the inner space of the conical cylinder through the wide conical port and enters the anechoic chamber from the inner space of the conical cylinder through the circulation ports and/or the narrow conical port, and the tail gas is discharged from the exhaust port.

Optionally, the cooling system includes: a cowling, which is fixed on the first side for the inflow of external cold air; and a centrifugal fan, which is fixed in the cowling and is connected with the engine, the engine driving the centrifugal fan to rotate, so that the rotating centrifugal fan causes the cold air to flow in the cowling.

Optionally, the dynamic balance system includes: a tail rotor; a rotor shaft; and a dynamic balance component; wherein the rotor shaft is rotationally connected with the tail rotor through the dynamic balance component, and the rotation plane of the tail rotor is vertical to the rotation plane of the main rotor.

Optionally, the dynamic balance component includes: at least one gasket; a dynamic balance lever, wherein a first threaded hole and a second threaded hole are formed in the end part of the dynamic balance lever, a rotation hole is formed in the middle part of the dynamic balance lever, and the rotor shaft penetrates through the rotating hole to be rotationally connected with the tail rotor; and a first bolt and a second bolt, wherein the first bolt is correspondingly in threaded connection with the first threaded hole, the second bolt is correspondingly in threaded connection with the second threaded hole, the gasket is arranged between the first bolt and the first threaded hole, and/or, the gasket is arranged between the second bolt and the second threaded hole.

### Beneficial effects:

According to the unmanned helicopter provided by the present invention, the air inlet system is fixed on the second side of the unmanned helicopter, and the air inlet direction of the air inlet system faces to the direction of the nose, so that the air inlet direction of the airflow corresponds to the flow direction of airflow that flows reversely relative to the unmanned helicopter, that is, when the flow direction of the airflow that flows reversely relative to the unmanned helicopter is backward relative to the fuselage of the unmanned helicopter, the air inlet direction of the airflow of the unmanned helicopter is also backward relative to the fuselage of the unmanned helicopter, so that the airflow at the outside of the unmanned helicopter flows into the air inlet system smoothly, quickly and efficiently under the action of its own flow velocity relative to the unmanned helicopter, therefore the following technical problem in the prior art is solved: as the air inlet direction does not correspond to the flow velocity direction of the airflow, the air entering the fuselage with a unit volume is burnt insufficiently, which generates adverse effects on the normal flight of the unmanned helicopter.

### Brief Description of the Drawings

To illustrate technical solutions in the embodiments of the present invention or in the prior art more clearly, a brief introduction on the accompanying drawings which are needed in the description of the embodiments is given below. Apparently, the accompanying drawings in the description below are merely some of the embodiments of the present invention, based on which other drawings may be obtained by those of ordinary skill in the art without any creative effort.
Fig. 1 is a front view of an overall structure of an unmanned helicopter provided by an embodiment of the present invention;
Fig. 2 is a side view of Fig. 1;
Fig. 3 is a partial section view of a second side of the unmanned helicopter provided in Fig. 1;
Fig. 4 is a partial section view of a third side of the unmanned helicopter provided in Fig. 1;
Fig. 5 is a front view of an air inlet system of the unmanned helicopter provided in Fig. 1;
Fig. 6 is a schematic diagram of an overall structure of the air inlet system provided in Fig. 5;
Fig. 7 is a top view of an air inlet cover of the air inlet system provided in Fig. 5;
Fig. 8 is a first side view of the air inlet cover provided in Fig. 7;
Fig. 9 is a second side view of the air inlet cover provided in Fig. 7;
Fig. 10 is a front view of an exhaust system of the unmanned helicopter provided in Fig. 1;
Fig. 11 is a side view of the exhaust system provided in Fig. 10;
Fig. 12 is a schematic diagram of a structure of a second flexible connecting piece in the exhaust system provided in Fig. 10;
Fig. 13 is a schematic diagram of a connection relation of the air inlet system and the exhaust system in the unmanned helicopter provided in Fig. 1 when no heat shield is contained;
Fig. 14 is a front view of a connection relation of the air inlet system and the exhaust system provided in Fig. 13 when no heat shield is contained;
Fig. 15 is a schematic diagram of a connection relation of the air inlet system and the exhaust system in the unmanned helicopter provided in Fig. 1 when a heat shield is contained;
Fig. 16 is a front view of a connection relation of the air inlet system and the exhaust system provided in Fig. 15 when the heat shield is contained;
Fig. 17 is a front view of a connection relation of a cooling system, an engine and a first shield body in the unmanned helicopter provided in Fig. 1;
Fig. 18 is a schematic diagram of a connection relation of the cooling system, the engine and the first shield body provided in Fig. 17;
Fig. 19 is a schematic diagram of a connection relation of the air inlet system, the cooling system and the exhaust system in the unmanned helicopter provided in Fig. 1;
Fig. 20 is a front view of a connection relation of the air inlet system, the cooling system and the exhaust system provided in Fig. 19;
Fig. 21 is a schematic diagram of a structure of the cooling system in the unmanned helicopter provided in Fig. 1;
Fig. 22 is a schematic diagram of a connection relation of the cooling system and the first shield body provided in Fig. 21;
Fig. 23 is a schematic diagram of an overall structure of a centrifugal fan in the cooling system provided in Fig. 21;
Fig. 24 is a front view of the centrifugal fan in the cooling system provided in Fig. 21;
Fig. 25 is a schematic diagram of a structure of a dynamic balance system in the unmanned helicopter provided in Fig. 1;
Fig. 26 is a section view of a dynamic balance component in the dynamic balance system provided in Fig. 25.

### Detailed Description of the Embodiments

A clear and complete description of technical solutions in the embodiments of the present invention will be given below, in combination with the accompanying drawings in the embodiments of the present invention. Apparently, the embodiments described below are merely a part, but not all, of the embodiments of the present invention. All of other embodiments, obtained by those of ordinary skill in the art based on the embodiments of the present invention without any creative effort, fall into the protection scope of the present invention; wherein "and/or" keywords involved in the embodiments represent two situations, namely, and, or, in other words, A and/or B mentioned in the embodiments of the present invention represents the two situations of A and B and A or B and describes three states of existence of A and B, for example, A and/or B represents: only including A and not including B; only including B and not including A; and including A and B.

Furthermore, in the embodiments of the present invention, when a component is described as "fixed" to another component, it can be directly on the other component or an intermediate component can also exist. When a component is considered to be "connected" to another component, it can be directly connected to the other component or an intermediate component may also exist at the same time. When a component is considered to be "arranged" on another component, it can be directly arranged on the other component or an intermediate component may also exist at the same time. The terms "vertical", "horizontal", "left", "right" and similar expressions used in the embodiments of the present invention are only for illustrative purposes.

According to an unmanned helicopter provided by the present invention, an air inlet direction of airflow is set to correspond to the flow direction of the airflow that flows reversely relative to the unmanned helicopter, that is, when the flow direction of the airflow that flows reversely relative to the unmanned helicopter is backward relative to a fuselage of the unmanned helicopter, the air inlet direction of the airflow of the unmanned helicopter is also backward relative to the fuselage of the unmanned helicopter, so that the airflow at the outside of the unmanned helicopter flows into an air inlet system smoothly, quickly and efficiently under the action of its own flow velocity relative to the unmanned helicopter, therefore the following technical problem in the prior art is solved: as the air inlet direction does not correspond to the flow velocity direction of the airflow, the air entering the fuselage with a unit volume is burnt insufficiently, which generates adverse effects on the normal flight of the unmanned helicopter.

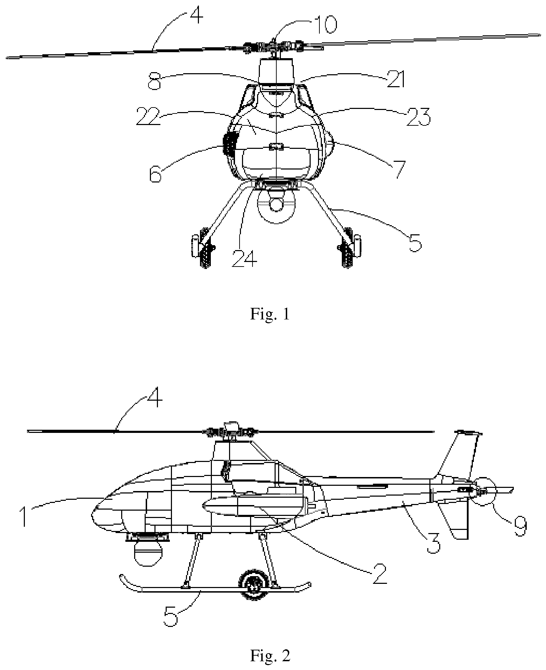

Specifically, referring to Fig. 1 and Fig. 2, the unmanned helicopter provided by the embodiment of the present invention includes a nose 1, a fuselage 2 and a tail 3. The fuselage 2 includes a first side 21, a second side 22, a third side 23 and a fourth side 24. A main rotor 4 for the flight of the unmanned helicopter is arranged on the first side 21, an undercarriage 5 for the landing of the unmanned helicopter is arranged on the fourth side 24, the second side 22 and the third side 23 are symmetrically distributed on both sides of the first side 21 and/or the fourth side 24, so that the fuselage 2 is formed by enclosure of the first side 21, the second side 22, the third side 23 and the fourth side 24.

Due to the high requirements of airborne equipment of the unmanned helicopter, the first side 21, the second side 22, the third side 23 and the fourth side 24 of the fuselage 2 are made of high-performance composite materials, such as a carbon fiber composite material, a glass fiber composite material and a honeycomb sandwich composite material. Compared with the traditional fuselage design material of the unmanned helicopter, the carbon fiber composite material, the glass fiber composite material and the honeycomb sandwich composite material and the like selected, at least have the following features: high specific strength and specific stiffness, small thermal expansion coefficient, strong resistance to fatigue and strong anti-vibration capacity.

Further, as the fuselage 2 of the present invention is made of the aforementioned composite material, due to designability of the composite material, optimal design can be carried out according to the strength and stiffness requirements of the helicopter without changing the structural weight, and thus the requirement of large area integral forming necessary for a height wing body fusion structure of the unmanned helicopter is satisfied. Moreover, the composite material has very excellent corrosion resistance, therefore the special requirements of long storage service life of the unmanned helicopter in severe environments can be satisfied, and the life cycle cost of use and maintenance is reduced.

Moreover, the composite material is applied to the unmanned helicopter, and since the composite material has special electromagnetic performance, the high stealth technical requirement of the integrated structure/function of the unmanned helicopter can be satisfied. Moreover, since the carbon fiber composite material, the glass fiber composite material and the honeycomb sandwich composite material and the like are selected, a chip or an alloy conductor can be easily implanted to form an intelligent material or structure.

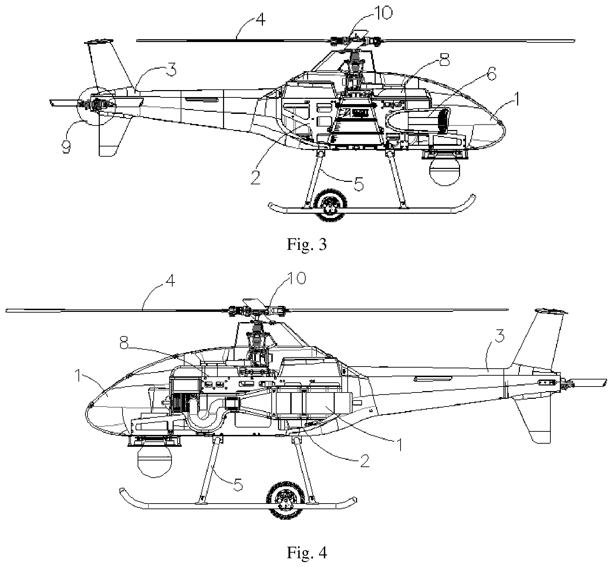

Further, referring to Figs. 1-2 in combination and also referring to Figs. 3-4, the unmanned helicopter provided by the embodiment of the present invention further includes: an air inlet system 6, an exhaust system 7, a cooling system 8 and a dynamic balance system 9.

The air inlet system 6 is fixed on the second side 22, and the air inlet direction of the air inlet system 6 faces to the direction of the nose. The exhaust system 7 is fixed on the third side 23, and the exhaust direction of the exhaust system 7 faces to the direction of the tail 3 to discharge the tail gas generated by the combustion in the unmanned helicopter through the exhaust system 7. The cooling system 8 is fixed on the first side 21, so that external cold air is sucked into the fuselage 2 via the cooling system 7 to cool the fuselage 2. The dynamic balance system 9 is rotationally fixed on the tail 3, and a rotation plane of the dynamic balance system 9 is vertical to the rotation panel of the main rotor 4, so as to control the dynamic balance degree of the unmanned helicopter in a flight process through the rotation of the dynamic balance system 9.

In order to illustrate the unmanned helicopter provided by the embodiment of the present invention in detail to support the technical problems to be solved in the present invention, the air inlet system 6, the exhaust system 7, the cooling system 8 and the dynamic balance system 9 are described below in detail one by one in combination with the accompany drawings.

### With respect to the air inlet system 6:

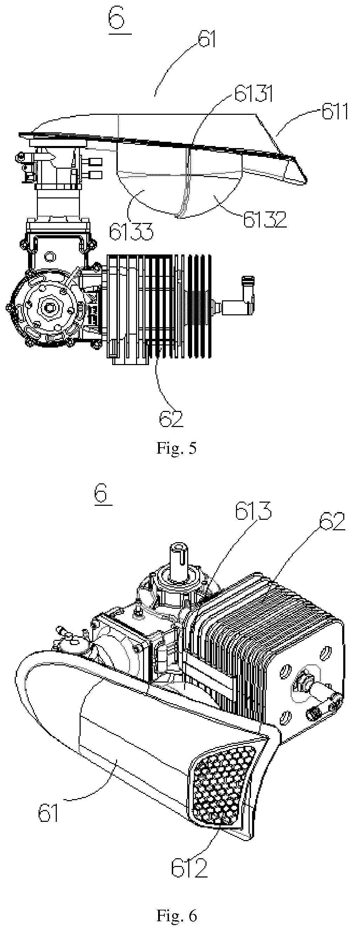

Referring to Figs. 5-6, the air inlet system 6 at least includes: an air inlet cover 61 and an engine 62. The air inlet cover 61 is fixed on the second side 22, and the air inlet direction of the air inlet cover 22 faces to the direction of the nose 1. That is, when the flow direction of the airflow that flows reversely relative to the unmanned helicopter is backward relative to the fuselage of the unmanned helicopter (in combination with what is shown in Figs. 1 and 3), the air inlet direction of the airflow of the air inlet cover 61 is also backward relative to the fuselage of the unmanned helicopter, so that the airflow at the outside of the unmanned helicopter can flow into the air inlet cover 61 smoothly, quickly and efficiently under the action of its own flow velocity relative to the unmanned helicopter. Furthermore, the engine 62 is fixed in the fuselage 2 and is located between the second side 22 and the third side 23, and the engine 62 is connected with the air inlet cover 61, so that the airflow flows into the engine 62 through the air inlet cover 61 to be burnt.

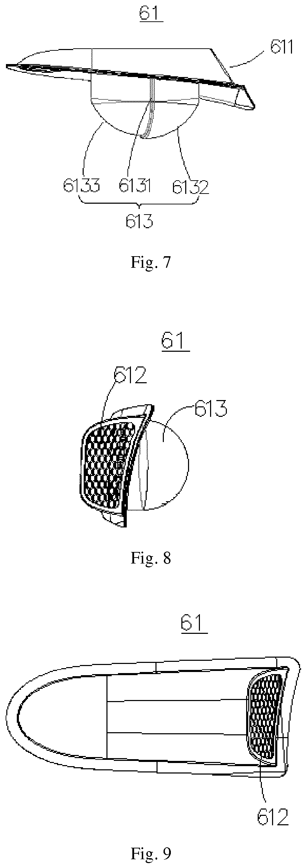

Further referring to Figs. 7-9, the air inlet cover 61 in the aforementioned air inlet system 6 can at least include: an air inlet 611, a filter screen 612 and a buffer chamber 613. The air inlet 611 is used for enabling the airflow that reversely flows relative to the unmanned helicopter to inflow. The filter screen 612 is fixed at the air inlet 611 to seal the entire air inlet 611 and remove air impurities containing S, N and other elements in the air, which is beneficial for the purified air to enter the engine 62 through the air inlet cover 61 to be burnt, so as to further improve the purity of the tail gas. Furthermore, a division plate 6131 is arranged in the buffer chamber 613. The buffer chamber 613 is divided into a first area 6132 and a second area 6133 by the division plate 6131, so that the airflow passing by the filter screen 612 firstly flows into the first area 6132 to be buffered, and the buffered airflow flows into the second area 6133 from the first area 6131 and flows into the engine 62 from the second area 6133.

It is worth mentioning that the division plate 6131 arranged in the buffer chamber 613 is a half division plate. It can be understood in such a manner that the buffer chamber 613 is divided into three parts by the division plate 6131, referring to Fig. 7, the first part is a right upper hemisphere of the buffer chamber 613 as shown in Fig. 7, namely the first area 6132; the second part is a left upper hemisphere of the buffer chamber 613 as shown in Fig. 7, namely the second area 6133; the third part is a lower hemisphere of the buffer chamber 613 as shown in Fig. 7, and the lower hemisphere can be understood as a flow channel necessary for the airflow passing by the filter screen 612 to firstly flow into the first area 6132 to be buffered, and for the buffered airflow to flow into the second area 6133 from the first area 6131. The division plate 6131 is arranged between the first area 6132 and the second area 6133. The purpose of buffering the airflow inflowing the buffer chamber 613 is achieved, and the following technical problem is overcome: due to an over high flow velocity of the airflow inflowing from the air inlet 611, when the airflow flowing at a high speed directly passes by the engine 62 and is discharged from the exhaust system 7, the airflow cannot be sufficiently burnt in the engine due to the over high speed to influence the power supply of the unmanned helicopter.

Of course, those skilled in the art can understand that the buffer chamber 613 being divided into the first area 6132 and the second area 6133 by the division plate 6131 to buffer the airflow inflowing the buffer chamber 613 is merely an implementation mode of the embodiment of the present invention, rather than a limitation. The inner structure of the buffer chamber 613 can also be designed in other manners, for example, an annular airflow channel (similar to an annular racing track) is arranged in the inner space of the buffer chamber 613, so that the airflow circularly flows into the buffer chamber 613 under the action of the annular airflow channel, so as to gradually reduce the flow velocity of the airflow, or a plurality of blinkers (similar to fan blades of an electric fan) are arranged in the inner space of the buffer chamber 613, so the airflow entering the buffer chamber 613 is decelerated under the action of the plurality of blinkers, in order to penetrate through the blinkers to flow into the engine to be burnt. In other words, as long as the buffer chamber 613 can buffer the flow velocity of the airflow that inflows from air inlet 611 before entering the engine 62, it shall fall into the protection scope of the embodiment of the present invention.

### With respect to the exhaust system 7:

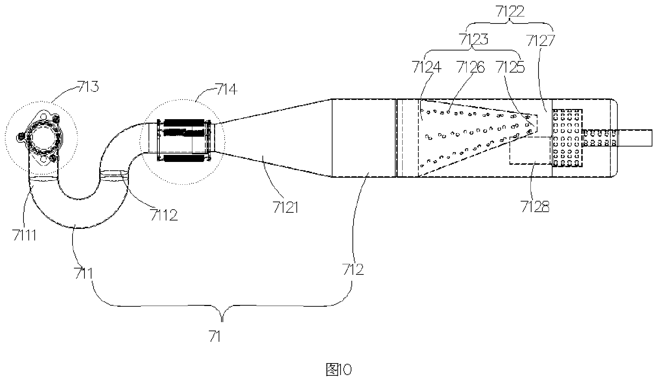

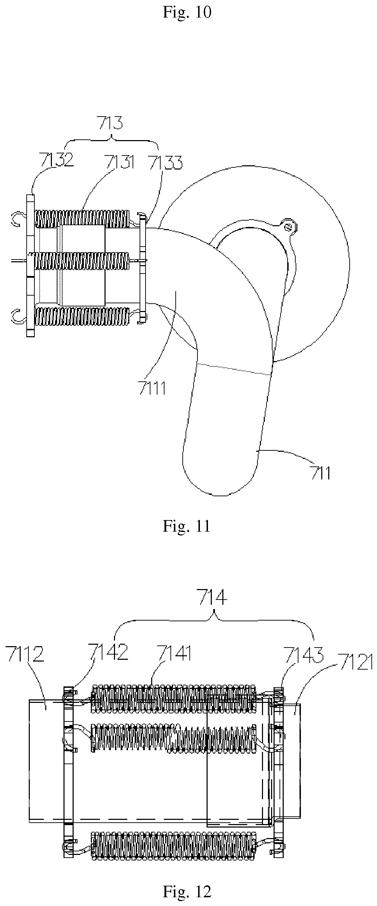

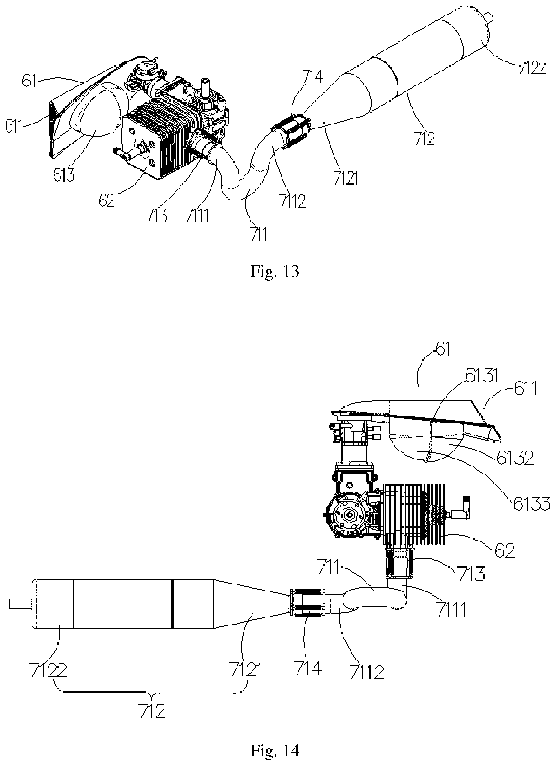

Referring to Figs. 10-16, the exhaust system 7 at least includes: an exhaust pipe 71 and a heat shield 72. The exhaust pipe 71 is arranged on the third side 23, and the exhaust direction of the exhaust pipe 71 faces to the direction of the tail 3 (in combination with illustration in Fig. 2) to discharge the tail gas generated by combustion in the engine 62 through the exhaust pipe. It should be noted herein that, as the exhaust direction of the exhaust pipe 71 faces to the direction of the tail 3, that is, the tail 3 is on the rear of the unmanned helicopter, then the exhaust direction of the exhaust pipe 71 faces to the rear of the unmanned helicopter. In a flight process of the unmanned helicopter, the fuselage 2 has a certain relative velocity relative to the airflow at the outside of the unmanned helicopter, when the exhaust direction of the exhaust pipe 71 faces to the rear of the unmanned helicopter, the tail gas in the exhaust pipe 71 can be quickly discharged from the exhaust pipe 71 under the action of the relative velocity, and thus the conduction performance of the airflow in the fuselage 2 is improved.

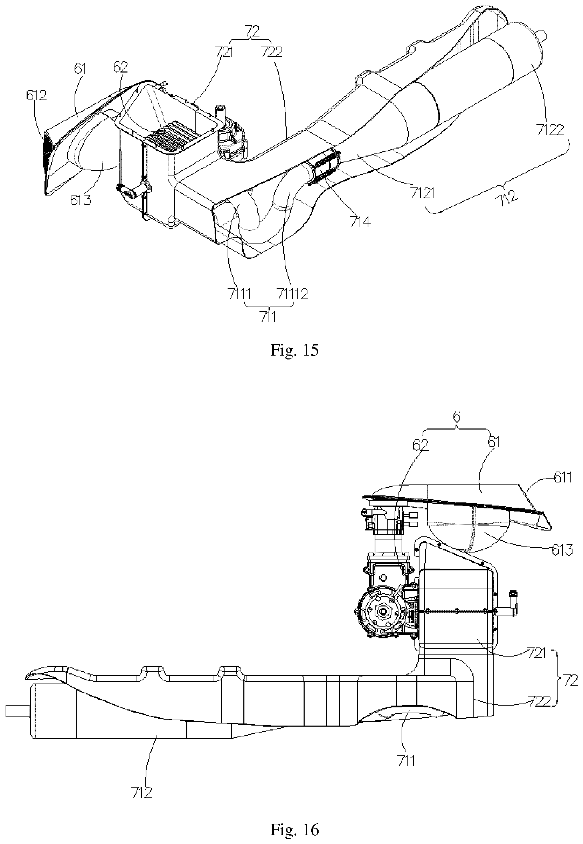

Furthermore, in a combustion process of the engine 62 and in a tail gas exhaust process of the exhaust pipe 71, the engine 62 and the exhaust pipe 71 in each case has a higher temperature. In order to prevent the higher temperature from influencing other components in the fuselage 2 to result in damage or burn-up of the other components due to the over high temperature, in the embodiment of the present invention, the heat shield 72 is further arranged between the engine 62 and the exhaust pipe 71 to isolate the exhaust pipe 71 and the engine 62 from the inner space of the fuselage 2, so as to prevent the high temperature of the engine 62 and the exhaust pipe 71 from being dispersed outside to influence the normal operation of the unmanned helicopter. Preferably, further referring to Figs. 15-16, the heat shield 72 includes a first shield body 721 and a second shield body 722. The first shield body 721 is matched with the shape of the engine 62 and is sleeved at the outside of the engine 62, and the second shield body 722 is matched with the shape of the exhaust pipe 71 and is sleeved at the outside of the exhaust pipe 71. Moreover, the first shield body 721 and the second shield body 722 are fixedly connected, for example, by welding, and can also be integrally formed. Further, the top of the first shield body 721 is open, so that a cold air outlet of the cooling system 8 can be conveniently connected with the top of the first shield body 721, and the cold air in the cooling system 8 enters the first shield body 721 from the top of the first shield body 721 to cool the engine 62. The inner structure of the cooling system 8 will be further described below in detail, and the exhaust system 7 is described herein at first.

Further, in combination with illustration in Fig.10, the exhaust pipe 71 in the exhaust system 7 can include: a first pipe 711, a second pipe 712, a first flexible connecting piece 713 and a second flexible connecting piece 714.

The first pipe 711 is U-shaped. The first pipe 711 includes a first flexible end 7111 for connection with the engine 62 and a second flexible end 7112 for connection with the second pipe 712. The second pipe 712 is cylindrical, and the second pipe 712 includes a third flexible end 7121 for connection with the first pipe 711 and an exhaust end 7122 used for exhausting the tail gas. The first flexible end 7111 is in flexible connection with the engine 62 through the first flexible connecting piece 713, so that the first pipe 711 can generate relative movement relative to the engine 62. The second flexible end 7111 is in flexible connection with the third flexible end 7121 through the second flexible connecting piece 714, so that the second pipe 712 can generate relative movement relative to the first pipe 711.

Specifically, since the first pipe 711 is designed to the U shape, on one hand, the space occupied by the first pipe 711 in the fuselage 2 is reduced, and on the other hand, the tail gas discharged from the engine 62 is buffered for the first time, so that the tail gas buffered for the first time obtains rebound for the first time. This is because incomplete combustion gases are more or less present in the tail gas discharged from the engine 62, in this way, when the incomplete combustion gases are discharged from the engine 62 with the tail gas, the tail gas collides with the pipe wall of the U-shaped first pipe 711 to be buffered for the first time, the tail gas buffered for the first time obtains rebound for the first time under the action of the pipe wall of the first pipe 711, at this time, a part of tail gas will further flow back into the engine 62 under the action of the rebound force for the first time to be burnt. Therefore, the working efficiency of the engine 62 is improved.

Further referring to Figs. 11-12, preferably, in the embodiment of the present invention, the first flexible connecting piece 713 includes a first spring group and a first plate group. The second flexible connecting piece 714 includes a second spring group and a second plate group.

The first spring group includes at least three first springs 7131. The first plate group includes a first fixing plate 7132 and a second fixing plate 7133. The first fixing plate 7132 is fixed at the air outlet of the engine 62, and the second fixing plate 7133 is fixed on the first flexible end 7111. In the at least three first springs 7131, one end of each first spring 7131 is connected with the first fixing plate 7132, and the other end thereof is connected with the second fixing plate 7133. Similarly, the second spring group includes at least three second springs 7141. The second plate group includes a third fixing plate 7142 and a fourth fixing plate 7143. The third fixing plate 7142 is fixed on the second flexible end 7112, the fourth fixing plate 7143 is fixed on the third flexible end 7121, and in the at least three second springs 7141, one end of each second spring 7141 is connected with the third fixing plate 7142, and the other end thereof is connected with the fourth fixing plate 7143.

Specifically, in the embodiment of the present invention, the air outlet of the engine 62 is sleeved on the first flexible end 7111, and the first fixing plate 7132 and the second fixing plate 7133 are flexibly connected by the at least three first springs 7131, so that the first fixing plate 7132 and the second fixing plate 7133 approach or depart from each other under the action of elastic tensile force or elastic tension of the first springs 7131. Finally, the first pipe 711 can generate relative movement relative to the engine 62 by means of the approach or departure of the first fixing plate 7132 and the second fixing plate 7133. Similarly, in the embodiment of the present invention, the third flexible end 7121 is sleeved on the second flexible end 7112, and the third fixing plate 7142 and the fourth fixing plate 7143 are flexibly connected by the at least three second springs 7141, so that the third fixing plate 7142 and the fourth fixing plate 7143 approach or depart from each other under the action of elastic tensile force or elastic tension of the second springs 7141. Finally, the second pipe 712 can generate relative movement relative to the first pipe 711 by means of the approach or departure of the third fixing plate 7142 and the fourth fixing plate 7143.

Of course, in the embodiment of the present invention, the following situation can also be available: the first flexible end 7111 is sleeved on the air outlet of the engine 62, and the second flexible end 7112 is sleeved on the third flexible end 7121; or, the first flexible end 7111 is sleeved on the air outlet of the engine 62, and the third flexible end 7121 is sleeved on the second flexible end 7112; or the air outlet of the engine 62 is sleeved on the first flexible end 7111, and the second flexible end 7112 is sleeved on the third flexible end 7121, other combination modes are also available, and this is not limited in the present invention. In other words, all sleeving modes that can achieve the relative movement of the first flexible end 7111 relative to the engine and the relative movement of the second flexible end 7112 relative to the third flexible end 7121 can be achieved, shall fall into the protection scope of the present invention.

It needs to be particularly noted that, in the embodiment of the present invention, the reason why the relative movement of the first flexible end 7111 relative to the engine and the relative movement of the second flexible end 7112 relative to the third flexible end 7121 need to be achieved is that, in a flight working process of the unmanned helicopter, the fuselage 2 of the unmanned helicopter will vibrate due to the normal work of the components in the fuselage, or impact of the external airflow on the fuselage or other external factors, particularly for the exhaust system 7 and the engine 62, they only have one connection point, that is, a point used for connecting the engine 62 with the first flexible end 7111 of the first pipe 711. Due to the existence of the one acting point, in the case of vibration, the connection of the engine 62 and the first pipe 711 is vulnerable to damage and even breakage, which seriously influences the normal flight of the unmanned helicopter. Therefore, in the embodiment of the present invention, the engine is in flexible connection with the exhaust pipe 71 through the first flexible connecting piece 713, so that they can generate relative movement with the vibration of the fuselage 2 in the case of frequent vibration of the entire fuselage 2, so as to effectively avoid the technical problem that the connection of the engine 62 and the first pipe 711 is damaged or broken due to the frequent vibration of the fuselage 2.

Furthermore, as the overall length of the exhaust pipe 71 is larger, when the exhaust pipe 71 has one acting point with the engine 62, the entire pipe body of the exhaust pipe 71 is very liable to break due to the vibration of the fuselage 2. Therefore, in the embodiment of the present invention, the first pipe 711 and the second pipe 712 constituting the exhaust pipe 71 are flexibly connected by the second flexible connecting piece 714, so that they can generate relative movement with the vibration of the fuselage 2 in the case of frequent vibration of the entire fuselage 2, so as to effectively avoid the technical problem that the entire pipe body of the exhaust pipe 71 is broken due to the frequent vibration of the fuselage 2.

Further referring to Fig. 10, the exhaust end 7122 of the second pipe 712 at least includes: a conical cylinder 7123 and an anechoic chamber 7127. The conical cylinder 7123 includes a wide conical port 7124 and a narrow conical port 7125, and a plurality of circulation ports 7126 are formed in the side wall of the conical cylinder 7123. The anechoic chamber 7127 is in the shape of a hollow cylinder and is sleeved on the periphery of the conical cylinder 7123, one end of the anechoic chamber 7127 is matched and aligned to the wide conical port 7124, and the other end thereof wrap the entire narrow conical port 7125. Moreover, at least one exhaust port 7128 is formed in the end wrapping the entire narrow conical port 7125 of the anechoic chamber 7127. At the same time, the axle wire of the exhaust port 7128 and the axle wire of the narrow conical port 7125 are stagger to each other, namely the axle wires of the two are not on the same straight line.

Specifically, it has been described above that the first pipe 711 is designed to the U shape, accordingly the tail gas discharged from the engine 62 is buffered for the first time, the tail gas buffered for the first time obtains rebound for the first time due to the pipe wall of the first pipe 711, and at this time, a part of tail gas will continue to flow back into the engine 62 under the action of the rebound force for the first time to be burnt. However, in the embodiment of the present invention, to further improve the combustion efficiency of the engine 62 to completely burn the air in the engine 62. The conical cylinder 7123 including the wide conical port 7124 and the narrow conical port 7125 is further designed in the exhaust end 7122 in the embodiment of the present invention, since the aperture of the wide conical port 7124 is larger than that of the narrow conical port 7125, the cylinder diameter of the conical cylinder 7123 gradually decreases from the wide conical port 7124 to the narrow conical port 7125 to form a conical structure. The tail gas entering the second pipe 712 from the first pipe 711 carries out secondary redound due to the conical wall of the conical cylinder 7123 so as to buffer the tail gas for the second time. The gas buffered for the second time flows back into the engine 62 to be burnt, so as to completely burn the gas in the engine 62, and the combustion efficiency of the engine 62 is greatly improved by the combination of the primary buffer and the secondary buffer of the tail gas.

Furthermore, in order to form the secondary buffer structure of the tail gas, the aperture of the narrow conical port 7125 from which the tail gas flows out from the conical cylinder 7123, so the exhaust efficiency is too low, when the tail gas only flows out from the narrow conical port 7125. Therefore, in the embodiment of the present invention, a plurality of circulation ports 7126 are formed in the cylinder wall of the conical cylinder 7123, therefore the tail gas is convenient to flow into the anechoic chamber 7127 through the narrow conical port 7125 on one hand, and on the other hand, the tail gas enters the anechoic chamber 7127 through the narrow conical port 7125 to guarantee the secondary buffer of the tail gas and further improve the exhaust efficiency of the tail gas.

Furthermore, the axle wire of the exhaust port 7128 and the axle wire of the narrow conical port 7125 are stagger to each other, namely the axle wires of the two are not on the same straight line. This is because when the tail gas is directly discharged from the conical cylinder 7123, the acting noise of the airflow is larger. In the embodiment of the present invention, the hollow cylindrical anechoic chamber 7127 is sleeved at the narrow conical port 7125 of the conical cylinder 7123, and a flow baffle is arranged on the end provided with the exhaust port 7128 of the anechoic chamber 7127, and the plate surface of the flow baffle is vertical to the gas outlet direction of the narrow conical port 7125. When the tail gas is discharged from the narrow conical port 7125, the discharged airflow will collide with the plate surface of the flow baffle in the anechoic chamber 7127 to rebound. As is well known, when the rebounded airflow meets the airflow that is about to collide with the flow baffle in the anechoic chamber 7127, due to the superposition of sound waves (superposition of crests and troughs), the superposed airflow is anechoic. Finally, the anechoic is discharged from the exhaust port 7128. The purpose of maximally reducing the noise of the tail gas of the unmanned helicopter is achieved.

### With respect to the cooling system 8:

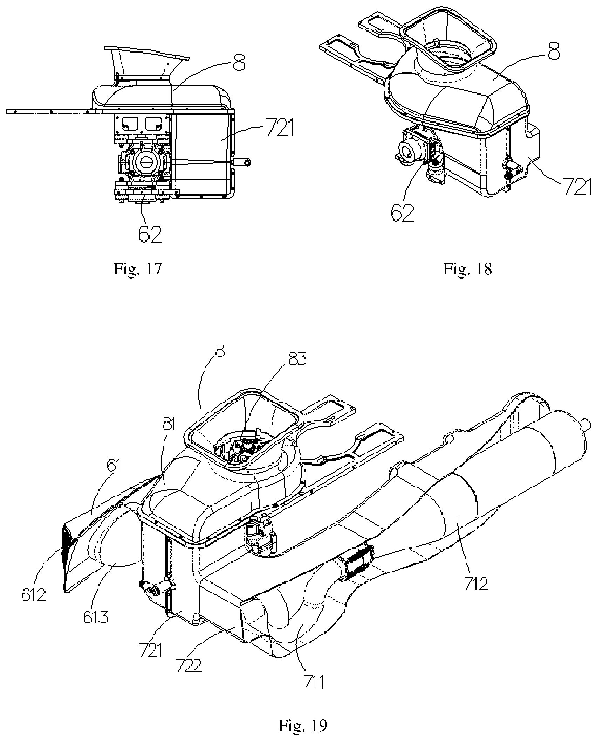

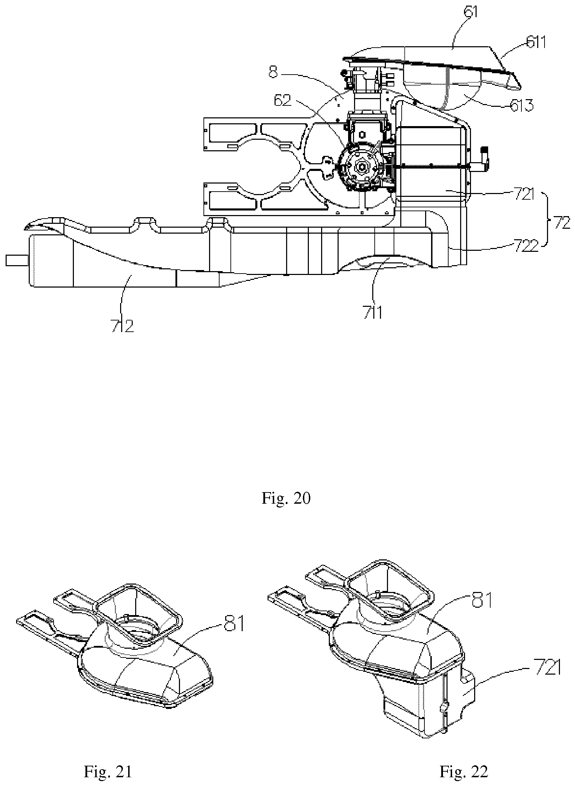

Referring to Figs. 17-24, the cooling system at least includes: a cowling 81 and a centrifugal fan 82. The cowling 81 is fixed on the first side 22 of the unmanned helicopter for the inflow of external cold air. The centrifugal fan 82 is fixed in the cowling 81, the centrifugal fan 82 is connected with the engine 62, the centrifugal fan 82 is driven by the engine 62 to rotate, and the rotating centrifugal fan 82 causes the cold air to flow in the cowling 81.

In the combustion process of the engine 62 and in the tail gas exhaust process of the exhaust pipe 71, the engine 62 and the exhaust pipe 71 in each case has a higher temperature due to a very high inner temperature. In order to prevent the higher temperature from influencing other components in the fuselage 2 to result in damage or burn-up of the other components due to the over high temperature. Referring to Figs. 17, 18, 19, 21 and 22, the cowling 81 is fixed on the first side 22 of the unmanned helicopter, and a horn mouth is formed in the top of the cowling 81 for the inflow of the external airflow. The bottom of the cowling 81 is connected with the first shield body 721 of the heat shield 72, so that the airflow inflowing from the horn mouth of the cowling 81 enters the first shield body 721 from the bottom of the cowling 81, then the airflow is dispersed by the first shield body 721 to different positions in the fuselage 2 of the unmanned helicopter to cool the inner space of the fuselage of the unmanned helicopter, so as to effectively avoid the technical problem that the higher temperature influences other components in the fuselage 2 to damage or burn the other components due to the over high temperature.

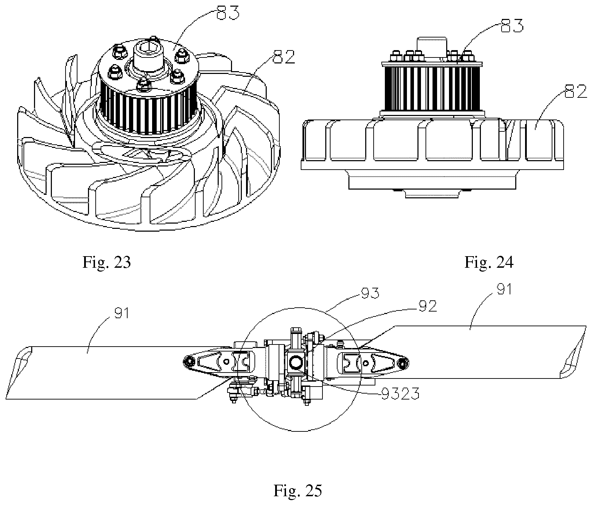

Furthermore, to better enable the external air to enter the cowling 81 from the horn mouth of the cowling 81 quickly and efficiently, preferably, the centrifugal fan 82 is further arranged in the cowling 81 in the embodiment of the present invention. As shown in Figs. 23-24, the centrifugal fan 82 is connected with the engine 62 through the cowling 81, so that the centrifugal fan 82 is driven by the engine 62 to rotate. The rotating centrifugal fan 82 forms turbine vortex in the inner space of the cowling 81 to suck the cold air at the outside of the horn mouth of the cowling 81 into the cowling 81, so as to cool the inner space of the fuselage 2. Of course, those skilled in the art can understand that, to achieve the rotation of the centrifugal fan 82, besides being driven by the engine 62, the centrifugal fan can also be driven by other driving devices with driving functions. For example, a driving cell is installed in the centrifugal fan 82, or the centrifugal fan 82 is connected with a driving power supply, and so on, and all these are applicable to the present invention.

### With respect to the dynamic balance system 9:

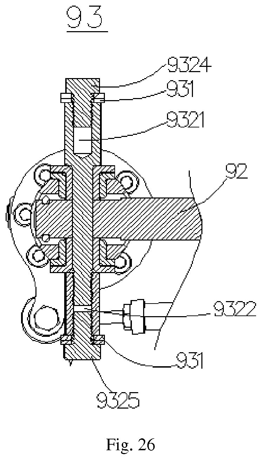

Referring to Figs. 25-26, the dynamic balance system 9 at least includes: a tail rotor 91, a rotor shaft 92 and a dynamic balance component 93. The rotor shaft 92 is rotationally connected with the tail rotor 91 through the dynamic balance component 93, and the rotation plane of the tail rotor 91 is vertical to the rotation plane of the main rotor 4.

Specifically, dynamic balance adjustment needs to be carried out on the two tail rotors 91 of the unmanned helicopter along the direction of the rotor shafts 92, so that the gravity centers of the tail rotors 91 and the rotor shafts 92 are close to the connection position of the two tail rotors 91, so as to guarantee the stability of the entire helicopter. However, if the partial weight of the tail rotors 91/rotor shafts 92 is blindly increased to achieve the aforementioned purpose, the rotating speed of the tail rotors 91 will be influenced, and then the flight work of the unmanned helicopter is influenced.

However, according to the dynamic balance system 9 provided by the embodiment of the present invention, the dynamic balance component 93 is arranged at other positions excluding the tail rotor 91/rotor shaft 92 to adjust the dynamic balance degree of the overall helicopter without influencing the rotating speed of the tail rotor 91, thereby reducing the vibration level of the tail 3 of the unmanned helicopter and overcoming the technical problem that the rotating speed of the tail rotor 91 is influenced by blindly increasing the partial weight of the tail rotor 91/rotor shaft 92.

The dynamic balance component 93 includes: at least one gasket 931, a dynamic balance lever 932, a first bolt 9234 and a second bolt 9325. A first threaded hole 9321 and a second threaded hole 9322 are formed in the end part of the dynamic balance lever 932, a rotation hole 9323 is formed in the middle part of the dynamic balance lever 932, and the rotor shaft 92 penetrates through the rotating hole 9323 to be rotationally connected with the tail rotor 91. The first bolt 9324 is correspondingly in threaded connection with the first threaded hole 9321, the second bolt 9325 is correspondingly in threaded connection with the second threaded hole 9322, the gasket 931 is arranged between the first bolt 9324 and the first threaded hole 9321, and/or, the gasket 931 is arranged between the second bolt 9325 and the second threaded hole 9322.

As mentioned above, to avoid directly increasing the partial weight of the tail rotor 91/rotor shaft 92 to influence the rotating speed of the tail rotor 91, the first threaded hole 9321 and the second threaded hole 9322 are formed in the end part of the dynamic balance lever 932 in the embodiment of the present invention, and the gasket 931 is arranged between the first bolt 9324 and the first threaded hole 9321, or between the second bolt 9325 and the second threaded hole 9322, so as to accurately adjust the dynamic balance degree of the tail of the unmanned helicopter by controlling the number of the gaskets 931, therefore the safety performance is high.

According to the unmanned helicopter provided by the embodiment of the present invention, the air inlet system 6 is fixed on the second side 22, and the air inlet direction of the air inlet system 6 faces to the direction of the nose; the exhaust system 7 is fixed on the third side 23, and the exhaust direction of the exhaust system 7 faces to the direction of the tail 3 to discharge the tail gas generated by the combustion in the unmanned helicopter through the exhaust system 7; the cooling system 8 is fixed on the first side 21, so that external cold air is sucked into the fuselage 2 via the cooling system 7 to cool the fuselage 2. On one hand, the airflow at the outside of the unmanned helicopter flows into the air inlet cover smoothly, quickly and efficiently under the action of its own flow velocity relative to the unmanned helicopter, on the other hand, the tail gas in the exhaust pipe 71 can be quickly discharged from the exhaust pipe 71 under the action of the relative velocity with respect to the fuselage 2, and thus the conduction performance of the airflow in the fuselage 2 is improved. Furthermore, the external air disperses the airflow to different positions in the fuselage 2 of the unmanned helicopter through the cooling system to cool the inner space of the fuselage of the unmanned helicopter, so as to effectively avoid the technical problem that the higher temperature influences other components in the fuselage 2 to damage or burn the other components due to the over high temperature.

Although the preferred embodiments of the present invention have been described, those skilled in the art can make additional variations and modifications to these embodiments once mastering the basic creative concept. Accordingly, the appended claims are intended to define the present invention.

## Claims

1. An unmanned helicopter, comprising a nose (1), a fuselage (2) and a tail (3), wherein the fuselage (2) is formed by enclosure of a first side (21), a second side (22), a third side (23) and a fourth side (24), an engine (62) fixed in the fuselage (2) and located between the second side (22) and the third side (23), a main rotor (4) for the flight of the unmanned helicopter is arranged on the first side (21), an undercarriage (5) for the landing of the unmanned helicopter is arranged on the fourth side (24), the second side (22) and the third side (23) are symmetrically distributed on both sides of the first side (21) and the fourth side (24); wherein the unmanned helicopter further comprises:
an air inlet system (6), the air inlet direction of which faces to the direction of the nose (1) so that the airflow flows into the engine (62) through the air inlet system (6) to be burnt and as the air inlet direction of the air inlet system (6) faces to the direction of the nose (1), the air inlet direction corresponds to the flow direction of airflow that flows reversely relative to the unmanned helicopter and which is backward relative to the fuselage (2), so that the airflow smoothly flows into the air inlet system (6) under the action of its own flow velocity relative to the unmanned helicopter,
an exhaust system (7) to discharge the tail gas generated by the combustion in the engine (62);
a cooling system (8), which is fixed on the first side (21), so that external cold air is sucked into the fuselage (2) via the cooling system (8) to cool the fuselage (2) the air inlet direction of the air inlet system (6) is parallel to the exhaust direction of the exhaust system (7), the exhaust direction of which faces to the direction of the tail (3) to discharge the tail gas generated by the combustion in the engine (62) through the exhaust system (7),
a dynamic balance system (9) is rotationally fixed on the tail (3), and a rotation plane of which is vertical to the rotation panel of the main rotor (4), so as to control the dynamic balance degree of the unmanned helicopter in a flight process through the rotation of the dynamic balance system (9),
**characterized by** :
the air inlet system (6) is only fixed on the second side (22);
the exhaust system (7) is only fixed on the third side (23).

2. The unmanned helicopter of claim 1, wherein the air inlet system (6) comprises:
an air inlet cover (61), which is fixed on the second side (22), and the air inlet direction of which faces to the direction of the nose (1); and
the engine (62),is connected with the air inlet cover (61), so that the airflow flows into the engine (62) through the air inlet cover (61) to be burnt.

3. The unmanned helicopter of claim 2, wherein the air inlet cover (61) comprises:
an air inlet (611), which is used for enabling the airflow that reversely flows relative to the unmanned helicopter to inflow;
a filter screen (612), which is fixed at the air inlet (611) to filter the airflow flowing into the air inlet (611); and
a buffer chamber (613), which is provided with a division plate (6131) therein;
wherein the buffer chamber (613) is divided into a first area (6132) and a second area (6133) by the division plate (6131), so that the airflow passing by the filter screen (612) firstly flows into the first area (6132) to be buffered, and the buffered airflow flows into the second area (6133) from the first area (6132) and flows into the engine (62) from the second area (6133).

4. The unmanned helicopter of claim 2, wherein the exhaust system (7) comprises:
an exhaust pipe (71), which is arranged on the third side (23), and the exhaust direction of which faces to the direction of the tail (3) to discharge the tail gas generated by combustion in the engine (62) through the exhaust pipe (71); and
a heat shield (72), which is arranged between the engine (62) and the exhaust pipe (71) to isolate the exhaust pipe (71) from the inner space of the fuselage (2).

5. The unmanned helicopter of claim 4, wherein:
the heat shield (72) includes a first shield body (721) matched with the shape of the engine (62) and a second shield body (722) matched with the shape of the exhaust pipe (71); and
the top of the first shield body (721) is open, a cold air outlet of the cooling system (8) being connected with the top of the first shield body (721), so that cold air from the cooling system (8) enters the first shield body (721) to cool the engine (62) .

6. The unmanned helicopter of claim 4, wherein the exhaust pipe (71) comprises:
a first pipe (711), which is U-shaped and comprises a first flexible end (7111) and a second flexible end (7112);
a second pipe (712), which is cylindrical and comprises a third flexible end (7121) and an exhaust end (7122);
a first flexible connecting piece (713), through which the first flexible end (7111) is in flexible connection with the engine (62), so that the first pipe (711) can generate relative movement relative to the engine (62); and
a second flexible connecting piece (714), through which the second flexible end (7112) is in flexible connection with the third flexible end (7121), so that the second pipe (712) can generate relative movement relative to the first pipe (711);
wherein the tail gas after combustion in the engine (62) enters the first pipe (711) through the first flexible end (7111) to be buffered, and the buffered tail gas enters the second pipe (712) through the second flexible end (7112) and the third flexible end (7121) successively and is discharged from the exhaust pipe (71).

7. The unmanned helicopter of claim 6, wherein,
the first flexible connecting piece (713) comprises a first spring group and a first plate group; wherein the first spring group comprises at least three first springs (7131); the first plate group comprises a first fixing plate (7132) and a second fixing plate (7133); the first fixing plate (7132) is fixed at the air outlet of the engine (62), the second fixing plate (7133) is fixed on the first flexible end (7111), and in the at least three first springs (7131), one end of each first spring (7131) is connected with the first fixing plate (7132), and the other end thereof is connected with the second fixing plate (7132); the air outlet of the engine (62) is sleeved on the first flexible end (7111), and the first flexible end (7111) can generate relative movement relative to the engine (62) through the at least three first springs (7131); and/or,
the second flexible connecting piece (714) comprises a second spring group and a second plate group; wherein the second spring group comprises at least three second springs (7141); the second plate group comprises a third fixing plate (7142) and a fourth fixing plate (7143); the third fixing plate (7142) is fixed on the second flexible end (7112), the fourth fixing plate (7143) is fixed on the third flexible end (7121), and in the at least three second springs (7141), one end of each second spring is connected with the third fixing plate (7142), and the other end thereof is connected with the fourth fixing plate (7143); the third flexible end (7121) is sleeved on the second flexible end (7112), and the third flexible end (7121) can generate relative movement relative to the second flexible end (7112) through the at least three second springs (7141).

8. The unmanned helicopter of claim 7, wherein the exhaust end (7122) comprises:
a conical cylinder (7123), which comprises a wide conical port (7124) and a narrow conical port (7125), with a plurality of circulation ports (7126) formed in the side wall of the conical cylinder (7123); and
an anechoic chamber (7127), which is sleeved on the periphery of the conical cylinder (7123), with an exhaust port (7128) formed in the anechoic chamber (7127);
wherein the tail gas in the second pipe (712) flows into the inner space of the conical cylinder (7123) through the wide conical port (7124) and enters the anechoic chamber (7127) from the inner space of the conical cylinder (7123) through the circulation ports (7126) and/or the narrow conical port (7125), and the tail gas is discharged from the exhaust port (7128).

9. The unmanned helicopter of claim 2, wherein the cooling system (8) comprises:
a cowling (81), which is fixed on the first side (21) for the inflow of external cold air;
and
a centrifugal fan (82), which is fixed in the cowling (81) and is connected with the engine (62), the engine (62) driving the centrifugal fan (82) to rotate, so that the rotating centrifugal fan causes the cold air to flow in the cowling (81).

10. The unmanned helicopter of claim 1, wherein the dynamic balance system (9) comprises:
a tail rotor (91);
a rotor shaft (92); and
a dynamic balance component (93);
wherein the rotor shaft (92) is rotationally connected with the tail rotor (91) through the dynamic balance component (93), and the rotation plane of the tail rotor (91) is vertical to the rotation plane of the main rotor (4).

11. The unmanned helicopter of claim 10, wherein the dynamic balance component (93) comprises:
at least one gasket (931);
a dynamic balance lever (932), wherein a first threaded hole (9321) and a second threaded hole (9322) are formed in the end part of the dynamic balance lever (932), a rotation hole (9323) is formed in the middle part of the dynamic balance lever (932), and the rotor shaft (92) penetrates through the rotation hole (9323) to be rotationally connected with the tail rotor (91); and
a first bolt (9324) and a second bolt (9325), wherein the first bolt (9324) is correspondingly in threaded connection with the first threaded hole (9321), the second bolt (9325) is correspondingly in threaded connection with the second threaded hole (9322), the gasket (931) is arranged between the first bolt (9324) and the first threaded hole (9321), and/or, the gasket (931) is arranged between the second bolt (9325) and the second threaded hole (9322).

## Patentansprüche

1. Unbemannter Hubschrauber, umfassend eine Front (1), einen Rumpf (2) und ein Heck (3), wobei der Rumpf (2) durch Umschließen einer ersten Seite (21), einer zweiten Seite (22), einer dritten Seite (23) und einer vierten Seite (24) gebildet wird, ein Motor (62) im Rumpf (2) befestigt ist und zwischen der zweiten Seite (22) und der dritten Seite (23) liegt, ein Hauptrotor (4) für den Flug des unbemannten Hubschraubers auf der ersten Seite (21) angeordnet ist, ein Untergestell (5) zum Landen des unbemannten Hubschraubers auf der vierten Seite (24) angeordnet ist, die zweite Seite (22) und die dritte Seite (23) symmetrisch auf beiden Seiten aus der ersten Seite (21) und der vierten Seite (24) verteilt sind; wobei der unbemannte Hubschrauber weiter umfasst:
ein Lufteinlasssystem (6), dessen Lufteinlassrichtung der Richtung der Front (1) zugewandt ist, sodass der Luftstrom durch das Lufteinlasssystem (6) in den Motor (62) strömt, um verbrannt zu werden, und da die Lufteinlassrichtung des Lufteinlasssystems (6) der Richtung der Front (1) zugewandt ist, die Lufteinlassrichtung der Strömungsrichtung von Luftstrom entspricht, die bezogen auf den unbemannten Hubschrauber entgegengesetzt strömt und die bezogen auf den Rumpf (2) rückwärts ist, sodass der Luftstrom unter der Wirkung seiner eigenen Strömungsgeschwindigkeit bezogen auf den unbemannten Hubschrauber sanft in das Lufteinlasssystem (6) strömt,
ein Auspuffsystem (7), um das durch die Verbrennung im Motor (62) erzeugte Abgas auszustoßen;
ein Kühlsystem (8), das auf der ersten Seite (21) befestigt ist, sodass kalte Außenluft über das Kühlsystem (8) in den Rumpf (2) gesaugt wird, um den Rumpf (2) zu kühlen,
die Lufteinlassrichtung des Lufteinlasssystems (6) zur Auspuffrichtung des Auspuffsystems (7) parallel ist, dessen Auspuffrichtung der Richtung des Hecks (3) zugewandt ist, um das durch die Verbrennung im Motor (62) erzeugte Abgas durch das Auspuffsystem (7) auszustoßen,
ein dynamisches Gleichgewichtssystem (9) rotatorisch am Heck (3) befestigt ist, und eine Rotationsebene dessen zur Rotationsplatte des Hauptrotors (4) vertikal ist, um den dynamischen Gleichgewichtsgrad des unbemannten Hubschraubers in einem Flugprozess durch das Rotieren des dynamischen Gleichgewichtssystems (9) zu steuern,
**dadurch gekennzeichnet, dass**:
das Lufteinlasssystem (6) nur auf der zweiten Seite (22) befestigt ist;
das Auspuffsystem (7) nur auf der dritten Seite (23) befestigt ist.

2. Unbemannter Hubschrauber nach Anspruch 1, wobei das Lufteinlasssystem (6) umfasst:
eine Lufteinlassabdeckung (61), die auf der zweiten Seite (22) befestigt ist, und deren Lufteinlassrichtung der Richtung der Front (1) zugewandt ist; und
der Motor (62) mit der Lufteinlassabdeckung (61) verbunden ist, sodass der Luftstrom durch die Lufteinlassabdeckung (61) in den Motor (62) strömt, um verbrannt zu werden.

3. Unbemannter Hubschrauber nach Anspruch 2, wobei die Lufteinlassabdeckung (61) umfasst:
einen Lufteinlass (611), der dafür verwendet wird, dem Luftstrom, der bezogen auf den unbemannten Hubschrauber entgegengesetzt strömt, zu ermöglichen, einzuströmen;
einen Filtersieb (612), der am Lufteinlass (611) befestigt ist, um den Luftstrom, der in den Lufteinlass (611) strömt, zu filtern; und
eine Pufferkammer (613), die mit einer Teilungsplatte (6131) in derselben versehen ist;
wobei die Pufferkammer (613)durch die Teilungsplatte (6131) in einen ersten Bereich (6132) und einen zweiten Bereich (6133) geteilt ist, sodass der Luftstrom, der den Filtersieb (612) passiert, zuerst in den ersten Bereich (6132) strömt, um gepuffert zu werden, und der gepufferte Luftstrom aus dem ersten Bereich (6132) in den zweiten Bereich (6133) strömt und aus dem zweiten Bereich (6133) in den Motor (62) strömt.

4. Unbemannter Hubschrauber nach Anspruch 2, wobei das Auspuffsystem (7) umfasst:
ein Auspuffrohr (71), das auf der dritten Seite (23) angeordnet ist, und dessen Auspuffrichtung der Richtung des Hecks (3) zugewandt ist, um das durch Verbrennung im Motor (62) erzeugte Abgas durch das Auspuffrohr (71) auszustoßen; und
ein Hitzeschild (72), das zwischen dem Motor (62) und dem Auspuffrohr (71) angeordnet ist, um das Auspuffrohr (71) vom Innenraum des Rumpfes (2) zu isolieren.

5. Unbemannter Hubschrauber nach Anspruch 4, wobei:
das Hitzeschild (72) einen ersten Schildkörper (721) einschließt, der auf die Form des Motors (62) abgestimmt ist, und einen zweiten Schildkörper (722), der auf die Form des Auspuffrohrs (71) abgestimmt ist; und
die Oberseite des ersten Schildkörpers (721) offen ist, wobei ein Kaltluftauslass des Kühlsystems (8) mit der Oberseite des ersten Schildkörpers (721) verbunden ist, sodass kalte Luft aus dem Kühlsystem (8) in den ersten Schildkörper (721) eintritt, um den Motor (62) zu kühlen.

6. Unbemannter Hubschrauber nach Anspruch 4, wobei das Auspuffrohr (71) umfasst:
ein erstes Rohr (711), das U-förmig ist und ein erstes flexibles Ende (7111) und ein zweites flexibles Ende (7112) umfasst;
ein zweites Rohr (712), das zylindrisch ist und ein drittes flexibles Ende (7121) und ein Auspuffende (7122) umfasst;
ein erstes flexibles Verbindungsstück (713), durch das das erste flexible Ende (7111) mit dem Motor (62) in flexibler Verbindung steht, sodass das erste Rohr (711) bezogen auf den Motor (62) relative Bewegung erzeugen kann; und
ein zweites flexibles Verbindungsstück (714), durch das das zweite flexible Ende (7112) mit dem dritten flexiblen Ende (7121) in flexibler Verbindung steht, sodass das zweite Rohr (712) bezogen auf das erste Rohr (711) relative Bewegung erzeugen kann;
wobei das Abgas nach Verbrennung im Motor (62) durch das erste flexible Ende (7111) in das erste Rohr (711) eintritt, um gepuffert zu werden, und das gepufferte Abgas nacheinander durch das zweite flexible Ende (7112) und das dritte flexible Ende (7121) in das zweite Rohr (712) eintritt und aus dem Auspuffrohr (71) ausgestoßen wird.

7. Unbemannter Hubschrauber nach Anspruch 6, wobei das erste flexible Verbindungsstück (713) eine erste Federgruppe und eine erste Plattengruppe umfasst; wobei die erste Federgruppe mindestens drei erste Federn (7131) umfasst; die erste Plattengruppe eine erste Befestigungsplatte (7132) und eine zweite Befestigungsplatte (7133) umfasst; die erste Befestigungsplatte (7132) am Luftauslass des Motors (62) befestigt ist, die zweite Befestigungsplatte (7133) am ersten flexiblen Ende (7111) befestigt ist, und bei den mindestens drei ersten Federn (7131) ein Ende jeder ersten Feder (7131) mit der ersten Befestigungsplatte (7132) verbunden ist, und das andere Ende derselben mit der zweiten Befestigungsplatte (7132) verbunden ist; der Luftauslass des Motors (62) auf das erste flexible Ende (7111) gemufft ist, und das erste flexible Ende (7111) durch die mindestens drei ersten Federn (7131) relative Bewegung bezogen auf den Motor (62) erzeugen kann;
und/oder
das zweite flexible Verbindungsstück (714) eine zweite Federgruppe und eine zweite Plattengruppe umfasst; wobei die zweite Federgruppe mindestens drei zweite Federn (7141) umfasst; die zweite Plattengruppe eine dritte Befestigungsplatte (7142) und eine vierte Befestigungsplatte (7143) umfasst; die dritte Befestigungsplatte (7142) am zweiten flexiblen Ende (7112) befestigt ist, die vierte Befestigungsplatte (7143) am dritten flexiblen Ende (7121) befestigt ist, und bei den mindestens drei zweiten Federn (7141) ein Ende jeder zweiten Feder mit der dritten Befestigungsplatte (7142) verbunden ist, und das andere Ende derselben mit der vierten Befestigungsplatte (7143) verbunden ist; das dritte flexible Ende (7121) auf das zweite flexible Ende (7112) gemufft ist, und das dritte flexible Ende (7121) durch die mindestens drei zweiten Federn (7141) relative Bewegung bezogen auf das zweite flexible Ende (7112) erzeugen kann.

8. Unbemannter Hubschrauber nach Anspruch 7, wobei das Auspuffende (7122) umfasst:
einen kegelförmigen Zylinder (7123), der eine weite kegelförmige Öffnung (7124) und eine enge kegelförmige Öffnung (7125) umfasst, mit einer Vielzahl von Zirkulationsöffnungen (7126), die in der Seitenwand des kegelförmigen Zylinders (7123) gebildet sind; und
eine Absorberkammer (7127), die auf den Umfang des kegelförmigen Zylinders (7123) gemufft ist, mit einer Auspufföffnung (7128), die in der Absorberkammer (7127) gebildet ist;
wobei das Abgas im zweiten Rohr (712) durch die weite kegelförmige Öffnung (7124) in den Innenraum des kegelförmigen Zylinders (7123) strömt und aus dem Innenraum des kegelförmigen Zylinders (7123) durch die Zirkulationsöffnungen (7126) und/oder die enge kegelförmige Öffnung (7125) in die Absorberkammer (7127) eintritt, und das Abgas aus dem Auspuffrohr (7128) ausgestoßen wird.

9. Unbemannter Hubschrauber nach Anspruch 2, wobei das Kühlsystem (8) umfasst:
eine Verkleidung (81), die auf der ersten Seite (21) befestigt ist, für das Einströmen von kalter Außenluft; und
einen Zentrifugallüfter (82), der in der Verkleidung (81) befestigt ist und mit dem Motor (62) verbunden ist, wobei der Motor (62) den Zentrifugallüfter (62) so antreibt, dass dieser rotiert, sodass der rotierende Zentrifugallüfter die kalte Luft dazu bringt, in die Verkleidung (81) zu strömen.

10. Unbemannter Hubschrauber nach Anspruch 1, wobei das dynamische Gleichgewichtssystem (9) umfasst:
einen Heckrotor (91);
eine Rotorwelle (92); und
eine dynamische Gleichgewichtskomponente (93);
wobei die Rotorwelle (92) durch die dynamische Gleichgewichtskomponente (93) rotatorisch mit dem Heckrotor (91) verbunden ist, und die Rotationsebene des Heckrotors (91) zur Rotationsebene des Hauptrotors (4) vertikal ist.

11. Unbemannter Hubschrauber nach Anspruch 10, wobei die dynamische Gleichgewichtskomponente (93) umfasst:
mindestens eine Dichtung (931);
einen dynamischen Gleichgewichtshebel (932), wobei eine erste Gewindebohrung (9321) und eine zweite Gewindebohrung (9322) im Endteil des dynamischen Gleichgewichtshebels (932) gebildet sind, eine Rotationsbohrung (9323) im Mittelteil des dynamischen Gleichgewichtshebels (932) gebildet ist, und die Rotorwelle (92) durch die Rotationsbohrung (9323) hindurchtritt, um rotatorisch mit dem Heckrotor (91) verbunden zu werden; und
einen ersten Bolzen (9324) und einen zweiten Bolzen (9325), wobei der erste Bolzen (9324) entsprechend mit der ersten Gewindebohrung (9321) in Gewindeverbindung steht, der zweite Bolzen (9325) entsprechend mit der zweiten Gewindebohrung (9322) in Gewindeverbindung steht, die Dichtung (931) zwischen dem ersten Bolzen (9324) und der ersten Gewindebohrung (9321) angeordnet ist, und/oder die Dichtung (931) zwischen dem zweiten Bolzen (9325) und der zweiten Gewindebohrung (9322) angeordnet ist.

## Revendications

1. Hélicoptère sans pilote, comprenant un nez (1), un fuselage (2) et une queue (3), dans lequel le fuselage (2) est formé par l'enveloppe d'un premier côté (21), d'un deuxième côté (22), d'un troisième côté (23) et d'un quatrième côté (24), un moteur (62) fixé dans le fuselage (2) et situé entre le deuxième côté (22) et le troisième côté (23), un rotor principal (4) pour le vol de l'hélicoptère sans pilote est agencé sur le premier côté (21), un sous-chariot (5) pour l'atterrissage de l'hélicoptère sans pilote est agencé sur le quatrième côté (24), le deuxième côté (22) et le troisième côté (23) sont symétriquement distribués sur les deux côtés du premier côté (21) et du quatrième côté (24) ; dans lequel l'hélicoptère sans pilote comprend en outre :
un système d'entrée d'air (6), dont la direction d'entrée d'air fait face à la direction du nez (1) de sorte que le flux d'air s'écoule dans le moteur (62) au travers du système d'entrée d'air (6) pour être brûlé et lorsque la direction d'entrée d'air du système d'entrée d'air (6) fait face à la direction du nez (1), la direction d'entrée d'air correspond à la direction de flux du flux d'air qui s'écoule inversement par rapport à l'hélicoptère sans pilote et qui est vers l'arrière par rapport au fuselage (2) de sorte que le flux d'air s'écoule sans à-coups dans le système d'entrée d'air (6) sous l'action de sa propre vitesse d'écoulement par rapport à l'hélicoptère sans pilote,
un système d'échappement (7) pour décharger le gaz de queue généré par la combustion dans le moteur (62) ;
un système de refroidissement (8) qui est fixé sur le premier côté (21) de sorte que de l'air froid externe soit aspiré dans le fuselage (2) via le système de refroidissement (8) pour refroidir le fuselage (2),
la direction d'entrée d'air du système d'entrée d'air (6) est parallèle à la direction d'échappement du système d'échappement (7), dont la direction d'échappement fait face à la direction de la queue (3) pour décharger le gaz de queue généré par la combustion dans le moteur (62) au travers du système d'échappement (7),
un système d'équilibre dynamique (9) est fixé en rotation sur la queue (3), et dont un plan de rotation est vertical au panneau de rotation du rotor principal (4) de sorte à commander le degré d'équilibre dynamique de l'hélicoptère sans pilote dans un processus de vol au travers de la rotation du système d'équilibre dynamique (9),
**caractérisé par** :
le système d'entrée d'air (6) est seulement fixé sur le deuxième côté (22) ;
le système d'échappement (7) est seulement fixé sur le troisième côté (23).

2. Hélicoptère sans pilote selon la revendication 1, dans lequel le système d'entrée d'air (6) comprend :
un couvercle d'entrée d'air (61) qui est fixé sur le deuxième côté (22), et dont la direction d'entrée d'air fait face à la direction du nez (1) ; et
le moteur (62) est raccordé au couvercle d'entrée d'air (61) de sorte que le flux d'air s'écoule dans le moteur (62) au travers du couvercle d'entrée d'air (61) à brûler.

3. Hélicoptère sans pilote selon la revendication 2, dans lequel le couvercle d'entrée d'air (61) comprend :
une entrée d'air (611) qui est utilisée pour permettre au flux d'air qui s'écoule inversement par rapport à l'hélicoptère sans pilote d'affluer ;
un écran filtre (612) qui est fixé sur l'entrée d'air (611) pour filtrer le flux d'air s'écoulant dans l'entrée d'air (611) ; et
une chambre d'amortissement (613) qui est dotée d'une plaque de division (6131) dedans ;
dans lequel la chambre d'amortissement (613) est divisée en une première zone (6132) et une seconde zone (6133) par la plaque de division (6131) de sorte que le flux d'air passant par l'écran filtre (612) s'écoule premièrement dans la première zone (6132) à amortir, et le flux d'air amorti s'écoule dans la seconde zone (6133) depuis la première zone (6132) et s'écoule dans le moteur (62) depuis la seconde zone (6133).

4. Hélicoptère sans pilote selon la revendication 2, dans lequel le système d'échappement (7) comprend :
un tuyau d'échappement (71) qui est agencé sur le troisième côté (23), et dont la direction d'échappement fait face à la direction de la queue (3) pour décharger le gaz de queue généré par combustion dans le moteur (62) au travers du tuyau d'échappement (71) ; et
un bouclier thermique (72) qui est agencé entre le moteur (62) et le tuyau d'échappement (71) pour isoler le tuyau d'échappement (71) de l'espace intérieur du fuselage (2).

5. Hélicoptère sans pilote selon la revendication 4, dans lequel :
le bouclier thermique (72) comporte un premier corps de bouclier (721) adapté à la forme du moteur (62) et un second corps de bouclier (722) adapté à la forme du tuyau d'échappement (71) ; et
le dessus du premier corps de bouclier (721) est ouvert, une sortie d'air froid du système de refroidissement (8) étant raccordée au-dessus du premier corps de bouclier (721) de sorte que de l'air froid du système de refroidissement (8) entre dans le premier corps de bouclier (721) pour refroidir le moteur (62).

6. Hélicoptère sans pilote selon la revendication 4, dans lequel le tuyau d'échappement (71) comprend :
un premier tuyau (711) qui est en forme de U et comprend une première extrémité flexible (7111) et une deuxième extrémité flexible (7112) ;
un second tuyau (712) qui est cylindrique et comprend une troisième extrémité flexible (7121) et une extrémité d'échappement (7122) ;
une première pièce de raccordement flexible (713) au travers de laquelle la première extrémité flexible (7111) est en raccordement flexible avec le moteur (62) de sorte que le premier tuyau (711) puisse générer le mouvement relatif par rapport au moteur (62) ; et
une seconde pièce de raccordement flexible (714) au travers de laquelle la deuxième extrémité flexible (7112) est en raccordement flexible avec la troisième extrémité flexible (7121) de sorte que le deuxième tuyau (712) puisse générer le mouvement relatif par rapport au premier tuyau (711) ;
dans lequel le gaz de queue après la combustion dans le moteur (62) entre dans le premier tuyau (711) au travers de la première extrémité flexible (7111) à amortir, et le gaz de queue amorti entre dans le second tuyau (712) au travers de la deuxième extrémité flexible (7112) et la troisième extrémité flexible (7121) successivement et est déchargé du tuyau d'échappement (71).

7. Hélicoptère sans pilote selon la revendication 6, dans lequel
la première pièce de raccordement flexible (713) comprend un premier groupe de ressort et un premier groupe de plaque ; dans lequel le premier groupe de ressort comprend au moins trois premiers ressorts (7131) ; le premier groupe de plaque comprend une première plaque de fixation (7132) et une seconde plaque de fixation (7133) ; la première plaque de fixation (7132) est fixée sur la sortie d'air du moteur (62), la seconde plaque de fixation (7133) est fixée sur la première extrémité flexible (7111), et dans les au moins trois premiers ressorts (7131), une extrémité de chaque premier ressort (7131) est raccordée à la première plaque de fixation (7132), et l'autre extrémité de celui-ci est raccordée à la seconde plaque de fixation (7132) ; la sortie d'air du moteur (62) est manchonnée sur la première extrémité flexible (7111), et la première extrémité flexible (7111) peut générer un mouvement relatif par rapport au moteur (62) au travers des au moins trois premiers ressorts (7131) ; et/ou
la seconde pièce de raccordement flexible (714) comprend un second groupe de ressort et un second groupe de plaque ; dans lequel le second groupe de ressort comprend au moins trois seconds ressorts (7141) ; le second groupe de plaque comprend une troisième plaque de fixation (7142) et une quatrième plaque de fixation (7143) ; la troisième plaque de fixation (7142) est fixée sur la deuxième extrémité flexible (7112), la quatrième plaque de fixation (7143) est fixée sur la troisième extrémité flexible (7121), et dans les au moins trois seconds ressorts (7141), une extrémité de chaque second ressort est raccordée à la troisième plaque de fixation (7142), et l'autre extrémité de celui-ci est raccordée à la quatrième plaque de fixation (7143) ; la troisième extrémité flexible (7121) est manchonnée sur la deuxième extrémité flexible (7112), et la troisième extrémité flexible (7121) peut générer un mouvement relatif par rapport à la deuxième extrémité flexible (7112) au travers des au moins trois seconds ressorts (7141).

8. Hélicoptère sans pilote selon la revendication 7, dans lequel l'extrémité d'échappement (7122) comprend :
un cylindre conique (7123) qui comprend un orifice conique large (7124) et un orifice conique étroit (7125), avec une pluralité d'orifices de circulation (7126) formés dans la paroi latérale du cylindre conique (7123) ; et
une chambre anéchoïque (7127) qui est manchonnée sur la périphérie du cylindre conique (7123), avec un orifice d'échappement (7128) formé dans la chambre anéchoïque (7127) ;
dans lequel le gaz de queue dans le second tuyau (712) s'écoule dans l'espace intérieur du cylindre conique (7123) au travers de l'orifice conique large (7124) et entre dans la chambre anéchoïque (7127) depuis l'espace intérieur du cylindre conique (7123) au travers des orifices de circulation (7126) et/ou l'orifice conique étroit (7125), et le gaz de queue est déchargé de l'orifice d'échappement (7128).

9. Hélicoptère sans pilote selon la revendication 2, dans lequel le système de refroidissement (8) comprend :
un capot (81) qui est fixé sur le premier côté (21) pour l'afflux d'air froid externe ;
et
un ventilateur centrifuge (82) qui est fixé dans le capot (81) et est raccordé au moteur (62), le moteur (62) entraînant le ventilateur centrifuge (82) en rotation de sorte que le ventilateur centrifuge rotatif amène l'air froid à s'écouler dans le capot (81).

10. Hélicoptère sans pilote selon la revendication 1, dans lequel le système d'équilibre dynamique (9) comprend :
un rotor de queue (91) ;
un arbre de rotor (92) ; et
un composant d'équilibre dynamique (93) ;
dans lequel l'arbre de rotor (92) est raccordé de manière rotative au rotor de queue (91) au travers du composant d'équilibre dynamique (93), et le plan de rotation du rotor de queue (91) est vertical au plan de rotation du rotor principal (4).

11. Hélicoptère sans pilote selon la revendication 10, dans lequel le composant d'équilibre dynamique (93) comprend :
au moins un joint d'étanchéité (931) ;
un levier d'équilibre dynamique (932), dans lequel un premier trou fileté (9321) et un second trou fileté (9322) sont formés dans la partie d'extrémité du levier d'équilibre dynamique (932), un trou de rotation (9323) est formé dans la partie médiane du levier d'équilibre dynamique (932), et l'arbre de rotor (92) pénètre au travers du trou de rotation (9323) pour être raccordé en rotation au rotor de queue (91) ; et
un premier boulon (9324) et un second boulon (9325), dans lequel le premier boulon (9324) est en raccordement fileté de manière correspondante avec le premier trou fileté (9321), le second boulon (9325) est en raccordement fileté de manière correspondante avec le second trou fileté (9322), le joint d'étanchéité (931) est agencé entre le premier boulon (9324) et le premier trou fileté (9321), et/ou le joint d'étanchéité (931) est agencé entre le second boulon (9325) et le second trou fileté (9322).
